Europäisches Patentamt

European Patent Office

Office européen des brevets

(11) Veröffentlichungsnummer: **0 211 997**
**A1**

(12) **EUROPÄISCHE PATENTANMELDUNG**

(21) Anmeldenummer: 85110937.1

(51) Int. Cl.⁴: **B23B 51/00**

(22) Anmeldetag: 30.08.85

(43) Veröffentlichungstag der Anmeldung:
04.03.87 Patentblatt 87/10

(84) Benannte Vertragsstaaten:
AT BE CH DE FR GB IT LI LU NL SE

(71) Anmelder: **Firma Mächtle GmbH**
**Postfach 1322**
**D-7015 Korntal-Münchingen(DE)**

(72) Erfinder: **Mächtle, Daniel**
**Hörnleweg 8**
**D-7000 Stuttgart 31(DE)**

(74) Vertreter: **Raeck, Wilfrid, Dipl.-Ing.**
**Moserstrasse 8**
**D-7000 Stuttgart 1(DE)**

(54) **Hinterschnittwerkzeug.**

(57) Werkzeug zur Herstellung eines Hinterschnittes - (20) am oder in der Nähe des Grundes eines Bohrloches (10) in Beton oder anderem Baumaterial, mit einem Werkzeugschaft (14) zur Befestigung in einer Bohrmaschine und mit einem am Werkzeugschaft exzentrisch befestigten Schneidabschnitt (18), der mit Hartmetallschneiden (28) bestückt sein kann. Auf dem Werkzeugschaft ist eine Arbeitshülse (24) längsbeweglich geführt, die an ihrem vorangehenden Ende allmählich verjüngt und deren größter Durchmesser ungefähr demjenigen des Bohrloches angepasst ist. Die Länge des Werkzeugschaftes entspricht mindestens der Bohrlochlänge zuzüglich der Länge der Arbeitshülse.

Fig. 1

EP 0 211 997 A1

## Hinterschnittwerkzeug

Die Erfindung betrifft ein Werkzeug zur Herstellung eines Hinterschnitts innerhalb eines Bohrloches in Beton oder anderem Baumaterial, bestehend aus einem Werkzeugschaft zur Befestigung im Bohrfutter einer Bohrmaschine und einem am Werkzeugschaft befestigten, insbesondere mit Hartmetallschneiden bestückten Schneidabschnitt, dessen größte Querabmessungen gleich oder kleiner sind als der Bohrloch-Durchmesser.

Ein Hinterschnitt in einer Bohrung bedeutet, daß das Bohrloch am Grund oder auch im Abstand vom Grund verbreitert wird, wobei vorzugsweise die dem Bohrlocheingang zugewandte Rückwand der Erweiterung bzw. des Hinterschnitts zur Bohrlochachse möglichst senkrecht verläuft. Obwohl ein Hinterschnitt grundsätzlich auch aus einer konischen Erweiterung bestehen kann, bietet jedoch eine mit einer konischen Rückwand versehene Schulter einem entsprechenden Spreizdübel oder einem Spreizanker mit über den Normalumfang herausbewegbaren Riegelteilen meistens nicht genügend Halt für die vorgeschriebenen Auszugsbelastungen. Durch diesbezügliche hohe Belastungswerte zeichnen sich jedoch gerade die Hinter schnittdübel mit der Formschluß-Verankerung aus gegenüber Spreizdübeln, die vorwiegend mit Reibschluß im Bohrloch verankert werden.

Zur Ausführung einer Hinterschnittbohrung ist ein Werkzeug bekannt, das einen dem Durchmesser der Eingangsbohrung angepaßten Schaft aufweist, der nahe seinem vorderen Ende auf einer Querachse mindestens zwei diametral zueiner verlaufende Schneiden trägt. Diese Schneiden befinden sich zunächst innerhalb des Hüllkreises des Werkzeugschaftes und werden danach durch äußere Betätigung durch das Innere des Schafts hindurch um die Querachse verstellt, so daß sie über den Schaftumfang hinausragen und dabei den Hinterschnitt erzeugen. Die Schneide oder Schneiden sind aufgrund der geometrischen Verhältnisse in der Lage, eine kugelförmige Erweiterung herzustellen, gegebenenfalls auch eine halbkugelförmige Erweiterung, wenn auf der Querachse nur eine sich nach einer Seite erstreckende Schneide vorgesehen ist.

Dies bekannte Hinterschnittwerkzeug ist aufgrund der Lagerung und Abstützung der Querachse und der somit zwangsläufig geringen Abmessungen der Schneiden zur Erzeugung des Hinterschnitts, die im eigentlichen Bohrerschaft untergebracht werden müssen, sehr störanfällig und besitzen eine nur kurze Lebensdauer. Darüber hinaus erhält der Benutzer eines solchen Werkzeuges keinerlei Sicherheit ob und wieweit die Hinterschnittbohrung tatsächlich hergestellt worden ist.

Ein anderes bekanntes Werkzeug zur Herstellung eines Hinterschnitts in einer bestehenden Eingangsbohrung besteht aus einem Hinterschnitt-Bohrkopf, der am Ende eines relativ schmalen Bohrschaftes befestigt ist. Der Bohrkopf erweitert sich konisch zum Bohrlochgrund hin, wo er maximal den gleichen Durchmesser wie die Eingangsbohrung besitzt. Auf dem Schaft des Bohrwerkzeuges wird in einem geeigneten Abstand vom Hinterschnitt-Bohrkopf eine Scheibe festgemacht, deren Unterseite ballig mit einer verhältnismäßig großen Kugelkrümmung versehen ist. Der in ein Bohrwerkzeug eingespannte Bohrkopf wird nun in das bereits bestehende Bohrloch gebracht, wobei die ballige Scheibe die Tiefenbegrenzung am Bohrlocheingang besorgt. Durch Ausübung von seitlichem Druck auf die Bohrmaschine und das Werkzeug läßt sich dadurch allmählich der Hinterschnitt erzeugen. Diese Herstellungsmethode ist umständlich und ungenau, weil bei besonders hartem Widerstand am Bohrlochgrund der Bohrkopf dort ausweicht und somit der Hinterschnitt unregelmäßig und unvollständig angebracht wird.

Der Erfindung liegt die Aufgabe zugrunde, ein Hinterschnittwerkzeug anzugeben, das sich mit gegenüber dem Stand der Technik vergleichbar geringen Kosten herstellen läßt, eine größere Lebensdauer aufweist und mit dem sich eine Bohrlocherweiterung im Sinne eines Hinterschnitts zwangsläufig herstellen läßt.

Diese Aufgabe wird bei einem Werkzeug der eingangs allgemein bezeichneten Gattung erfindungsgemäß dadurch gelöst, daß der Schneidabschnitt exzentrisch am Werkzeugschaft in einem dem Hinterschnitt entsprechenden Abstand vom Bohrlochgrund bzw. vom Ende des Werkzeugschaftes befestigt ist, daß auf dem Werkzeugschaft eine Arbeitshülse längsbeweglich geführt ist, die an ihrem vorangehenden Ende allmählich konisch verjüngt und deren größter Durchmesser ungefähr dem des Bohrlochs angepaßt ist, und daß der Werkzeugschaft eine Länge aufweist, die mindestens der Bohrlochlänge zuzüglich der Länge der Arbeitshülse sowie einer Spannlänge für das Bohrmaschinenfutter entspricht.

Aufgrund dieses Vorschlages ergibt sich ein verhältnismäßig einfaches Werkzeug, das wie andere Hinterschnittwerkzeuge lediglich in die bestehende Vorbohrung eingeführt zu werden braucht, worauf man die Bohrmaschine einschaltet und die Arbeitshülse mit ihrem verjüngten Ende allmählich in die Bohrung hineinführt. Über die Arbeitshülse werden die am Werkzeug entstehenden Kräfte weitgehend in die das Bohrloch enthaltende Wand übertragen. Wenn die Arbeitshülse mit ihrem größten Durchmesser in das Bohrloch eingeführt worden ist, hat der Schneidabschnitt des Werkzeuges die größte Tiefe des Hinterschnitts erreicht.

Der exzentrisch am Werkzeugschaft angebrachte Schneidabschnitt kann einen radial nach außen weisenden, mit Hartmetallschneiden bestückten Arbeitsrand aufweisen, dessen Krümmung ungefähr der Bohrlochwandung entspricht.

Bei einer Ausführungsform kann der Arbeitsrand des Schneidabschnittes einen zusätzlichen Freiwinkel aufweisen, der in Drehrichtung hinter einer oder mehreren Hartmetallschneiden beginnt. Der Arbeitsrand kann die radial äußere Begrenzung zueinander paralleler Vorder-und Hinterkanten des exzentrisch am Werkzeugschaft angebrachten Schneidabschnittes bilden.

Bei einer anderen Ausführungsform kann der Schneidabschnitt aus einer in der Draufsicht zum Beispiel kreisförmigen, ovalen oder längsgestreckten am Werkzeugschaft exzentrisch angebrachten Scheibe bestehen, die hinter dem mit den Schneiden versehenen Arbeitsrand mit Leit-oder Abführungseinrichtungen für das entstehende Bohrklein versehen sein kann. Eine etwa kreisförmige Ausbildung des Schneidabschnittes kann bei größeren Bohrungen zu Beginn vorteilhaft sein, weil dadurch das Werkzeug in der schon bestehenden Bohrung eine Führung hat. Die sonst schon bei Beginn der Schneidwirkung erforderliche erhöhte Aufmerksamkeit der Bedienungsperson ist dadurch erst erforderlich, wenn die konische Arbeitshülse allmählich in das Bohrloch hineingeführt wird.

Gemäß einem weiteren Merkmal der Erfindung kann der Schneidabschnitt am Werkzeugschaft lösbar, insbesondere auswechselbar befestigt sein. Dazu kann eine formschlüssige Steckverbindung, z. B. mit Dreikant oder Vierkant, insbesondere zusätzlich zu einer Schraubfixierung vorgesehen sein.

Gemäß einem anderen grundsätzlichen Merkmal der Erfindung ist die Arbeitshülse mit einer Vortriebseinrichtung versehen. Dazu dient bei einer einfachen Ausführungsform ein seitlich von der Hülse abstehender Handgriff.

Gemäß einer anderen Ausführungsform kann die Arbeitshülse mit Innengewinde auf einem Feingewinde des Arbeitsschaftes zur Erzielung eines zwangsläufigen feinfühligen Vorschubes sitzen, während der Arbeitsschaft mit einer automatischen Drehrichtungsumkehr versehen ist, so daß die Arbeitshülse bei ausreichender Eindringtiefe in das Bohrloch automatisch zurückgeschraubt wird.

Als selbständige oder zusätzliche Vortriebseinrichtung der Arbeitshülse können Druckfedermittel vorgesehen sein, die zwischen der rückwärtigen Stirnseite der Hülse und einem am Werkzeugschaft axial feststehenden Bauteil abgestützt sind.

Gemäß einer zweiten grundsätzlichen Ausführungsform des Hinterschnittwerkzeuges nach der Erfindung kann der Werkzeugschaft mit seinem rückwärtigen Ende etwa mit der gleichen Exzentrizität wie der Schneidabschnitt an einer Scheibe befestigt sein, die im Bohrmaschinenfutter zentrisch gespannt ist. Durch diese Bauweise wird zu Beginn der Hinterschnittarbeiten in einem Bohrloch sichergestellt, daß sich die Bohrmaschine praktisch konzentrisch zur Bohrlochachse befindet und lediglich am vorderen Ende des Werkzeugs sich eine Unwucht in Form des exzentrischen Werkzeugschaftes mit der darauf geführten Arbeitshülse befindet. Sobald die konische Arbeitshülse in das Bohrloch hineingedrückt wird, wobei sie sich zunächst am Bohrlochumfang abwälzt, wird mit dem Hinterschnitt begonnen. Je weiter die Arbeitshülse in das Bohrloch eindringt, desto tiefer wird der Hinterschnitt, wobei dann der Schneidabschnitt und die zentrisch im Maschinenfutter gespannte Scheibe schließlich um den Werkzeugschaft exzentrisch rotieren.

Weitere Merkmale und Vorteile der Erfindung ergeben sich aus der nachfolgenden Beschreibung von Ausführungsbeispielen anhand der Zeichnung, die erfindungswesentliche Einzelheiten darstellen und auch aus den Ansprüchen. Die einzelnen Merkmale der Ansprüche können je einzeln für sich oder zu mehreren, in beliebiger Kombination, bei einer Ausführungsform der Erfindung verwirklicht sein.

Es zeigen

Fig. 1 eine schematische Seitenansicht eines Hinterschnittwerkzeuges in schematischer Darstellung gemäß einer ersten Ausführungsform der Erfindung,

Fig. 2 eine Draufsicht auf eine Ausführungsform eines Schneidabschnittes und

Fig. 3 eine perspektivische Ansicht einer Variante des Hinterschnittwerkzeugs gemäß der Erfindung.

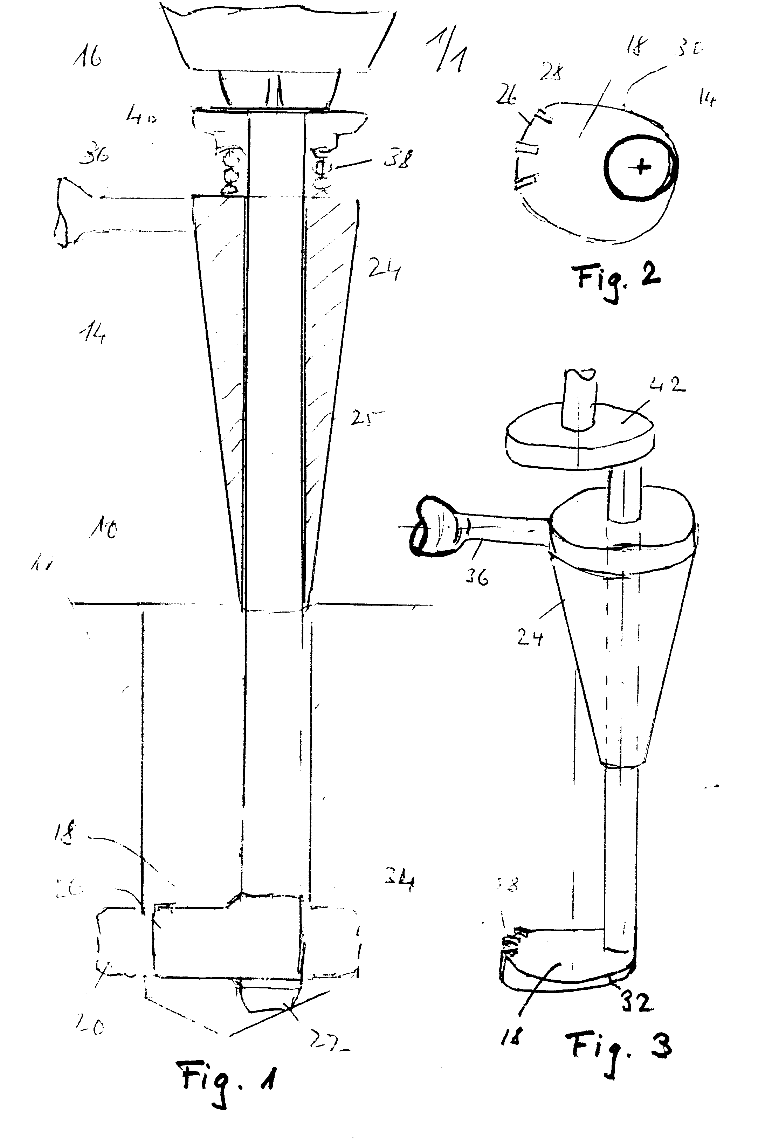

Entsprechend Fig. 1 ist ein in einem Bohrfutter 16 einer Bohrmaschine eingespannter Werkzeugschaft 14 an seinem vorderen Ende mit einem Schneidabschnitt 18 versehen, der zur Herstellung eines Hinterschnitts 20 in einem Bohrloch 10 innerhalb einer Wand 12 aus Beton oder anderem Baumaterial dient. Der bei demgezeigten Hinterschnitt 20 hat die dem Bohrlocheingang nähere Wand nahezu einen radialen Verlauf. Obwohl ein solcher Radialverlauf im allgemeinen angestrebt wird, da mit der dadurch gebildeten Schulter die günstigsten Rückhaltewerte bzw. hohe Auszugsfestigkeiten für einen dort zu befestigenden Hinterschnittdübel erreicht werden, ist im Rahmen der vorliegenden Erfindung der Radialverlauf dieser Wand nicht zwingend, sondern könnte auch durch einen anderen nach der einen oder anderen Seite leicht geneigten Verlauf ersetzt sein.

Dementsprechend ist auch der mit Schneiden besetzte Schneidabschnitt 26 im Profil ausgebildet. Entsprechend Fig. 1 ist der Schneidabschnitt 18 exzentrisch am Werkzeugschaft 14 befestigt, und er besitzt maximal den gleichen Durchmesser wie das schon in der Wand 12 befindliche Bohrloch 10.

Der Schneidabschnitt 18 kann einen kreisrunden oder jeden beliebigen anderen geeigneten Umriß besitzen, wobei jedoch der Arbeitsrand 26 - (Fig. 2) in seiner Krümmung ungefähr dem Umfang der Bohrlochwandung entspricht. In Drehrichtung hinter dem Arbeitsrand 26 kann ein zusätzlicher Freiwinkel vorgesehen sein, der hinter den im Bereich des Arbeitsrandes eingesetzten Hartmetallschneiden 28 beginnt. Das Profil des Schneidabschnitt 18 und auch dasjenige des Arbeitsrandes 26 kann an Stelle der rechtwinklig zueinander stehenden Begrenzungskanten gemäß Fig. 1 auch konisch, abgerundet oder in jeder beliebigen anderen zweckmäßigen Form ausgebildet sein.

Beim Ausführungsbeispiel gemäß Fig. 3 ist gezeigt, daß der Schneidabschnitt 18 hinter dem Arbeitsrand 26 mit Leit-und Abführungseinrichtungen 32 für das entstehende Bohrklein versehen ist. Im gezeigten Beispiel stehen die Abführeinrichtungen aus einem abgeflachten bzw. erniedrigten Bereich des Schneidabschnittes 18 über den Bohrmehl und Bohrklein während der Drehbewegung des Schneidabschnittes durch den zum Schaft nach oben hin gekrümmten Abschnitt 32 einen Antriebsimpuls in Richtung zur Bohrlochöffnung erhalten. Und auch andere nicht gezeigte Formgebungen oder zusätzlich aufgesetzte Leit-und Abführungseinrichtungen können im Rahmen der Erfindung mit Vorteil angewendet werden, z. B. auch dann, wenn der Schneidabschnitt 18 am Schaftende die Form eines querverlaufenden - schmalen Fingers oder dergleichen besitzt.

In Fig. 1 ist angedeutet, daß der Schneidabschnitt 18 auf den Werkzeugschaft 14 aufsteckbar und auswechselbar befestigt ist. Dazu kann eine Dreikant-oder Vierkantverbindung zusätzlich zu einer nicht gezeigten geschützt bzw. versenkt angebrachten Schraubfixierung vorgesehen sein. Die Schraubfixierung ist in Fig. 1 beispielsweise in einer Verlängerung 22 des Werkzeugschaftes untergebracht, die über den Schneidabschnitt 18 nach vorn hinausragt und mit einer Abrundung oder einer Anphasung am Grund des Bohrloches 10 anliegt.

Auf dem Werkzeugschaft 14 ist eine sich zu ihrem vorangehenden Ende 25 zu allmählich konisch verjüngende Arbeitshülse 24 geführt. Die Arbeitshülse 24 muß während des Betriebs des Hinterschnittwerkzeuges bzw. während der Drehung des Werkzeugschaftes durch die Bohrmaschine allmählich in das Bohrloch 10 hineingedrückt werden, um die Achse des Werkzeugschaftes allmählich mit der Bohrlochachse in Übereinstimmung zu bringen und dabei den Hinterschnitt in der Bohrlochwand zu schneiden.

Die Arbeitshülse 24 besitzt als Vortriebsmittel gemäß Fig. 1 und 3 einen seitlich von der Hülse abstehenden Handgriff 36. Der Handwerker ist damit in der Lage, mit der einen Hand die Bohrmaschine zu erfassen und mit der anderen Hand diese und das Werkzeug mit Hilfe des Handgriffes 36 zu unterstützen und zu führen. Als selbständige oder zusätzliche Vortriebseinrichtung der Arbeitshülse 24 kann eine starke Druckfeder 38 vorgesehen sein, die gemäß Fig. 1 zwischen einem auf dem Werkzeugschaft 14 drehbaren Abstützteil 40 und an der Rückseite der Arbeitshülse 24 wirksam ist.

Beim Ausführungsbeispiel eines Hinterschnittwerkzeuges gemäß der Erfindung entsprechend Fig. 3 ist der Werkzeugschaft 14, der die verschiebbare Arbeitshülse 24 trägt, zwischen dem exzentrisch angeschlossenen Schneidabschnitt 18 und einer ebenso exzentrisch angeschlossenen Scheibe 42 angeordnet. Die Scheibe 42 ist an ihrer Rückseite mit einem zentrischen Spannzapfen 44 versehen, der zur Einspannung im Futter 16 der Bohrmaschine vorgesehen ist. Anstelle des oder zusätzlich zu dem in Fig. 3 gezeigten Handgriff 36 an der Arbeitshülse 24 kann, insbesondere bei der gezeigten Ausführungsform, eine selbsttätige bzw. mit Servoantrieb betätigbare Vortriebseinrichtung für die Arbeitshülse vorgesehen sein.

Bei einem Vergleich der Ausführungsbeispiele nach Fig. 1 und 3 erkennt man, daß im ersteren Fall bei Beginn des Arbeitsvorganges die Bohrmaschine und der Werkzeugschaft 14 exzentrisch um die Mittelachse des Bohrloches herum bewegt werden, wobei diese Exzentrizität mit zunehmendem Hinterschnitt entfällt. Um den Arbeitsbeginn zu erleichtern, kann die Anwendung einer Hilfsvorrichtung zweckmäßig sein, die dafür sorgt, daß der Arbeitsschaft und die Bohrmaschine während der anfänglichen Exzentrizität dennoch parallel zur Achse des Bohrloches 10 umlaufen. Diese Hilfsvorrichtung kann aus einem an der Wand abgestützten beliebigen Gestell bestehen, an dem sich bezüglich Fig. 1 oberhalb der Arbeitshülse 24 eine waagerechte Scheibe mit einer Öffnung befindet, die ungefähr dem Maß der Exzentrizität des Bohrschaftumlaufes bzw. dem Durchmesser des Bohrloches 10 entspricht. Durch eine solche einfache Hilfe besteht Gewähr für eine ständige Parallelität des Werkzeugschaftes zwischen Antriebsmaschine und Hinterschnittwerkzeug, wobei insbesondere auch die Handhabung durch den Handwerker erleichtert wird. An dem beispielsweise an der Wand 12 befestigten Gestell könnte beispielsweise auch ein Antrieb oder eine zusätzliche Führung für die Arbeitshülse 24 vorgesehen und abgestützt sein.

## Ansprüche

1. Werkzeug zur Herstellung eines Hinterschnitts innerhalb eines Bohrloches in Beton oder anderem Baumaterial, bestehend aus einem Werkzeugschaft zur Befestigung im Bohrfutter einer Bohrmaschine und einem am Werkzeugschaft befestigten, insbesondere mit Hartmetallschneiden bestückten Schneidabschnitt, dessen größte Querabmessungen gleich oder kleiner sind als der Bohrlochdurchmesser,

**dadurch gekennzeichnet,**

daß der Schneidabschnitt (18) exzentrisch am Werkzeugschaft in einem dem Hinterschnitt (20) entsprechenden Abstand vom Bohrlochgrund bzw. vom Ende des Werkzeugschaftes (14) befestigt ist,

daß auf dem Werkzeugschaft (14) eine Arbeitshülse (24) längsbeweglich geführt ist, die an ihrem vorangehenden Ende (25) allmählich konisch verjüngt und deren größter Durchmesser ungefähr dem des Bohrloches (10) angepaßt ist,

und daß der Werkzeugschaft eine Länge aufweist, die mindestens der Bohrlochlänge zuzüglich der Länge der Arbeitshülse (24) sowie einer Spannlänge für das Bohrmaschinenfutter (16) entspricht.

2. Hinterschnittwerkzeug nach Anspruch 1, dadurch gekennzeichnet, daß der exzentrisch am Werkzeugschaft (14) angebrachte Schneidabschnitt (18) einen radial nach außen weisenden, mit Hartmetallschneiden bestückten Arbeitsrand (26) aufweist, dessen Krümmung ungefähr dem Umfang der Bohrlochwandung entspricht.

3. Hinterschnittwerkzeug nach Anspruch 2, dadurch gekennzeichnet, daß der Arbeitsrand (26) des Schneidabschnittes einen zusätzlichen Freiwinkel aufweist, der in Drehrichtung hinter einer oder mehreren Hartmetallschneiden (28 beginnt.

4. Hinterschnittwerkzeug nach Anspruch 2 oder 3, dadurch gekennzeichnet, daß der Arbeitsrand - (26) die radial äußere Begrenzung zu einander paralleler Vorder-und Hinterkanten des exzentrisch am Werkzeugschaft angebrachten Schneidabschnittes (18) bildet.

5. Hinterschnittwerkzeug nach einem der Ansprüche 1 bis 3, dadurch gekennzeichnet, daß der Schneidabschnitt (18) aus einer in der Draufsicht im wesentlichen kreisförmigen, am Werkzeugschaft (14) exzentrisch angebrachten Scheibe besteht, die in Arbeitsrichtung vor dem mit Schneiden besetzten Arbeitsrand (26) einen Freiraum (30) aufweist und hinter dem Arbeitsrand mit Leit-oder Abführungseinrichtungen (32) für das entstehende Bohrklein versehen ist.

6. Hinterschnittwerkzeug nach einem der vorhergehenden Ansprüche, dadurch gekennzeichnet, daß der Schneidabschnitt (18) am Werkzeugschaft (14) lösbar, insbesondere auswechselbar befestigt ist.

7. Hinterschnittwerkzeug nach Anspruch 6, dadurch gekennzeichnet, daß für die auswechselbare Befestigung von Werkzeugschaft und Schneidabschnitt eine formschlüssige Steckverbindung, z.B. mit Dreikant oder Vierkant, insbesondere zusätzlich zu einer Schraubfixierung, vorgesehen ist.

8. Hinterschnittwerkzeug nach einem der vorhergehenden Ansprüche, dadurch gekennzeichnet, daß die Arbeitshülse (24) mit einer Vortriebseinrichtung versehen ist.

9. Hinterschnittwerkzeug nach Anspruch 8, dadurch gekennzeichnet, daß als Vortriebsmittel ein seitlich von der Hülse abstehender Handgriff (36) vorgesehen ist.

10. Hinterschnittwerkzeug nach Anspruch 8, dadurch gekennzeichnet, daß die Arbeitshülse (24) mit Innengewinde auf einem Feingewinde des Werkzeugschaftes (14) zur Erzielung eines zwangsläufigen feinfühligen Vorschubes sitzt, und daß der Werkzeugschaft über das Bohrfutter mit einer automatischen Drehrichtungsumkehr versehen ist, so daß die Arbeitshülse bei ausreichender Eindringtiefe in das Bohrloch (10) automatisch zurückgeschraubt wird.

11. Hinterschnittwerkzeug nach einem der vorhergehenden Ansprüche, dadurch gekennzeichnet, daß als selbständige oder zusätzliche Vortriebseinrichtung der Arbeitshülse Druckfedermittel (38) vorgesehen sind, die zwischen der rückwärtigen Stirnseite der Hülse und einem axial feststehenden Bauteil (40) abgestützt sind.

12. Hinterschnittwerkzeug nach einem der vorhergehenden Ansprüche, dadurch gekennzeichnet, daß der die Arbeitshülse (24) führende Werkzeugschaft (14) mit seinem rückwärtigen Ende etwa mit der gleichen Exzentrizität wie der Schneidabschnitt (18) an einer Scheibe (42) befestigt ist, die im Bohrmaschinenfutter zentrisch gespannt ist.

**Fig. 1**

**Fig. 2**

**Fig. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A- 595 908 (BRITISH UNITED SHOE MACHINERY CO., LTD.) * Seite 5, Zeilen 3-44; Figuren 1,2,5 * | 1,8 | B 23 B 51/00 |
| | --- | | |
| X | GB-A-2 088 756 (HILTI) * Seite 3, Zeilen 110-130; Seite 4, Zeilen 1-34; Figuren 5-7 * | 1-7 | |
| | --- | | |
| A | GB-A-2 048 135 (SANCHEZ VELASCO) | 1,12 | |
| | ----- | | RECHERCHIERTE SACHGEBIETE (Int Cl 4) |
| | | | B 23 B 51/00 |

Der vorliegende Recherchenbericht wurde für alle Patentansprüche erstellt.

| Recherchenort DEN HAAG | Abschlußdatum der Recherche 11-04-1986 | Prüfer BOGAERT F.L. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82